# EUROPEAN PATENT SPECIFICATION

(11) **EP 3 034 900 B1**
(45) Date of publication and mention of the grant of the patent: **20.03.2019**
(21) Application number: 15200586.4
(22) Date of filing: 16.12.2015
(51) Int. Cl.: F16D 1/06, F16D 3/06, F16C 3/02, F16D 31/02, F16D 1/10

(54) **FIXED COAXIAL SHAFT FOR A HYDRAULIC UNIT**
FESTE KOAXIALE WELLE FÜR EIN HYDRAULIKAGGREGAT
ARBRE COAXIAL FIXE POUR UNE UNITÉ HYDRAULIQUE

(30) Priority: 19.12.2014 US 201414576292
(43) Date of publication of application: 22.06.2016
(73) Proprietor: Hamilton Sundstrand Corporation, Charlotte, NC 28217 (US)
(72) Inventor: CAMPBELL, Kris H., Poplar Grove, IL Illinois 61065 (US); LEMMERS, Jr., Glenn C., Loves Park, IL Illinois 61111 (US); SMITH, Doren C., Rockford, IL Illinois 61101 (US)
(74) Representative: Dehns

(56) References cited:
- EP-A1- 2 402 560
- US-A- 4 834 693
- US-A1- 2011 053 726

## Description

### BACKGROUND OF THE INVENTION

Exemplary embodiments of this invention generally relate to an integrated drive generator, and more particularly, to a fixed shaft of a hydraulic unit of an integrated drive generator.

Aircrafts currently rely on electrical, pneumatic, and hydraulic systems for secondary power. A typical electrical system utilizes an integrated drive generator (IDG) coupled to each engine to provide a fixed frequency power to the distribution system and loads. One type of IDG includes a generator, a hydraulic unit, and a differential assembly arranged in a common housing. The differential assembly is operably coupled to a gas turbine engine via an input shaft. The rotational speed of the input shaft varies during the operation of the gas turbine engine. The hydraulic unit cooperates with the differential assembly to provide a constant speed to the generator throughout engine operation.

Due to packaging constraints, components of the hydraulic unit, such as nested, coaxial, variable and fixed shafts must be redesigned. US 4834693 describes a high specific modulus shaft for use in a dynamic assembly such as a gas turbine engine.

### BRIEF DESCRIPTION OF THE INVENTION

According to one embodiment of the invention, a fixed coaxial shaft of a hydraulic unit is provided including a body having a first end and a second opposite end. A plurality of first splines is formed in an exterior surface of the body adjacent the first end and a plurality of second splines is formed in the exterior surface of the body adjacent the second end. The plurality of first splines and the plurality of second splines are substantially identical. The body of the shaft has an outer diameter of about .640 ± .0005 inches (1.626 ± .0013 centimeters), an inner diameter of about .517 ± .010 inches (1.313 ± .0254 centimeters), and an overall length of about 2.678 ± .005 inches (6.802 ± .0127 centimeters).

### BRIEF DESCRIPTION OF THE DRAWINGS

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:
FIG. 1 is a schematic diagram of a generator system of an aircraft;
FIG. 2 is a cross-sectional schematic view of an example of an integrated drive generator (IDG);
FIG. 3 is a cross-sectional view of an example of a hydraulic unit of an integrated drive generator;
FIG. 4 is a perspective view of a fixed coaxial shaft configured for use in a hydraulic unit according to an embodiment of the invention;
FIG. 5 is a top view of the fixed coaxial shaft of FIG. 4 according to an embodiment of the invention;
FIG. 6 is a cross-sectional view of the fixed coaxial shaft taken along line 6-6 of FIG. 5 according to an embodiment of the invention;
FIG. 7 is a detail view of section B of the fixed coaxial shaft of FIG. 6 according to an embodiment of the invention; and
FIG. 8 is a cross-sectional view of one of the plurality of splines of FIG. 6 according to an embodiment of the invention.
The detailed description explains embodiments of the invention, together with advantages and features, by way of example with reference to the drawings.

### DETAILED DESCRIPTION OF THE INVENTION

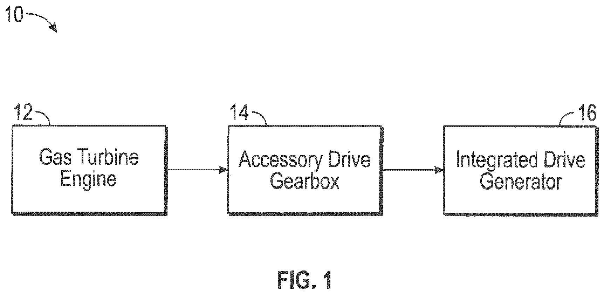

Referring now to FIG. 1, an example of a generator system 10 is schematically illustrated. The system 10 includes a gas turbine engine 12 that provides rotational drive to an integrated drive generator (IDG) 16 through an accessory drive gearbox 14 mounted on the gas turbine engine 12. The accessory drive gearbox is coupled to a spool of the engine 12, and the speed of the spool varies throughout the entire engine operation.

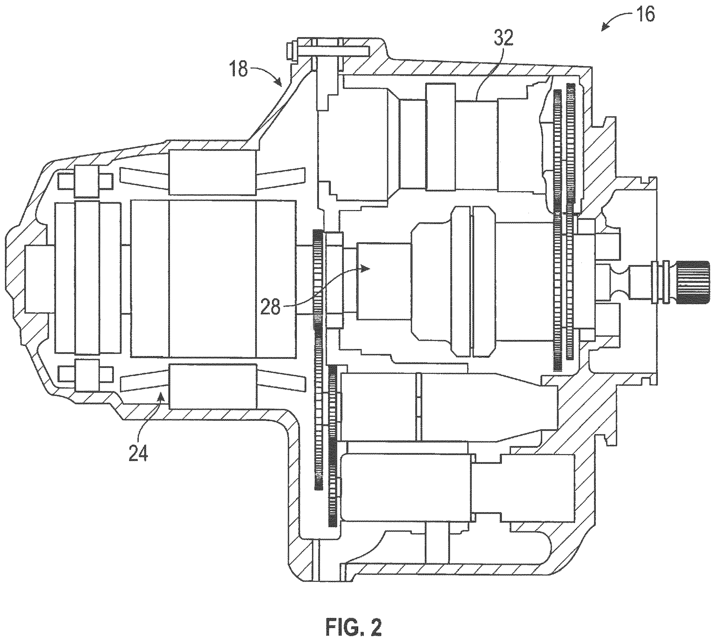

An example of an IDG 16 including a housing 18 is shown in FIG. 2. In the illustrated embodiment, the IDG 16 includes an input shaft configured to receive rotational drive from the accessory drive gearbox 14. The rotational speed of the input shaft varies depending upon the operation of the engine. To this end, a hydraulic unit 32 cooperates with the differential assembly 28 to convert the variable rotational speed from the input shaft to a fixed rotational output speed to the generator 24.

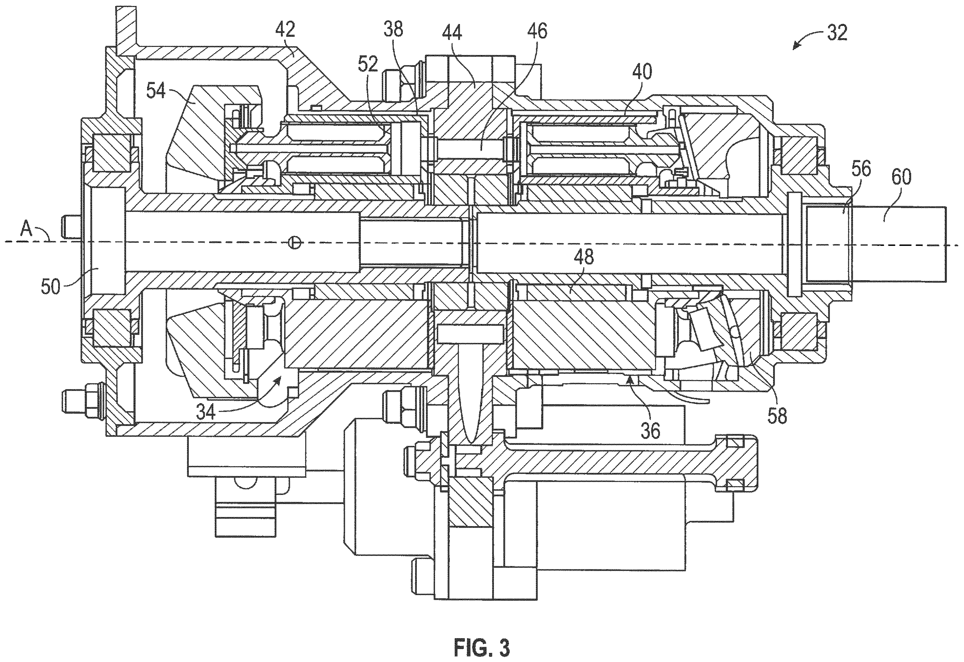

Referring now to FIG. 3, an example of a hydraulic unit 32 of the IDG 16 is illustrated in more detail. The hydraulic unit 32 includes a variable displacement hydraulic pump 34 and a fixed displacement hydraulic motor 36. The pump 34 and motor 36 have respective cylinder blocks 38 and 40 which are arranged for rotation about a common axis A within a housing 42 on opposite sides of a stationary port plate 44 of the hydraulic unit 32. The port plate 44 is formed with apertures 46 through which hydraulic fluid communication between the pump 34 and the motor 36 is established during normal operation of the hydraulic unit 32. A biasing mechanism 48 resiliently biases the cylinder blocks 38, 40 in the direction of the port plate 44.

The operation of the hydraulic unit 32 in an IDG 16 of an aircraft involves transmission of torque from an engine of the airplane to an input, which rotates the input shaft 50 of the hydraulic unit 32 about axis A. The cylinder block 38 of the pump 34 is connected to the input shaft 50 for rotation therewith. Pistons 52 within the cylinder block 38 of the pump 34 are displaced during this rotation an amount which is a function of the setting of a variable swash plate 54 of the pump 34.

Hydraulic fluid under pressure from the pump 34 is delivered to the hydraulic motor 36 through the port plate 44 for rotating the cylinder block 40 and an output shaft 56 to which it is fixedly connected. A fixed coaxial shaft 60 is arranged coaxially with and is coupled to the output shaft 56 to impart the rotation of the output shaft to an adjacent component, such as a differential (not shown) for example. The swash plate 58 of the motor 36 is fixed so that the operating speed of the motor 36 is a function of the displacement of the pump 34. The rotary output from output shaft 56 is added to or subtracted from the rotary motion from the engine through the conventional differential gearing of an IDG 16 for operating an electrical generator at a substantially constant rotational speed. That is, since the speed of the rotation from the airplane engine to the input 50 of the hydraulic unit 32 will vary, the position of the variable swash plate 54 is adjusted in response to these detected speed variations for providing the necessary reduction or increase in this speed for obtaining the desired constant output speed to the generator. During normal operation, there is a hydrostatic balance of the cylinder blocks and port plate. Although the hydraulic unit illustrated and described herein refers to the variable unit as a pump and the fixed unit as a motor, hydraulic units having other configurations, such as where the variable unit functions as a motor and the hydraulic unit operates as a pump for example, are within the scope of the invention.

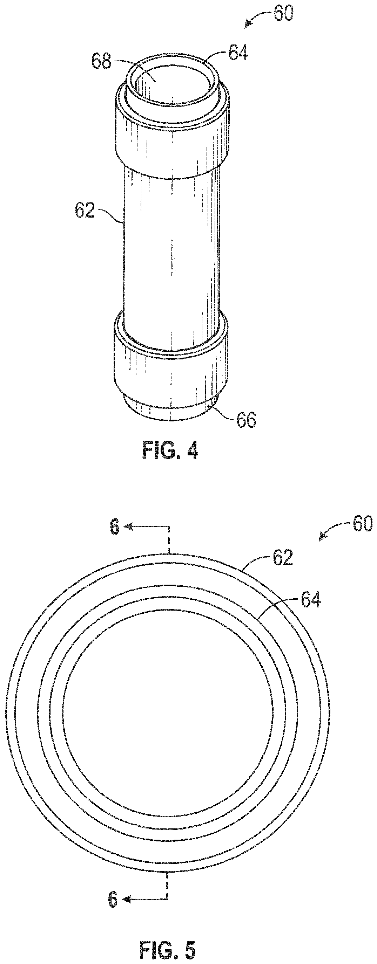

Referring now to FIGS. 4-8, a fixed coaxial shaft 60 of the hydraulic unit 32 according to an embodiment of the invention is illustrated in more detail. The shaft 60 includes a substantially elongated non-uniform body 62 having a first end 64, a second, opposite end 66, and a substantially hollow interior 68 that extends between the first and second ends 64, 66. The overall length of the body 62 is about 2.678 ± .005 inches (6.802 ± .0127 centimeters). The outer diameter of the body is about .640 ± .0005 inches (1.626 ± .0013 centimeters). In addition, the inner diameter of the body is about .517 ± .010 inches (1.313 ± .0254 centimeters). The first end 64 of the shaft 60 may include a chamfer 70 extending outwardly at about a 60° angle such that the inner diameter at the first end 64 of the body 62 is about .580 ± .010 inches (1.473 ± .0254 cm). Similarly, a chamfer 72 may be formed in the second, opposite end 66 of the body 62. In one embodiment, the chamfer 72 at the second end 66 is substantially identical to the chamfer 70 arranged at the first end 64.

A plurality of first splines 76 is formed in an exterior surface 74 of the body 62 adjacent the first end 64, and a plurality of second splines 78 is formed in the exterior surface 74 of the body 62 adjacent the second end 66 thereof. The plurality of first splines 76 and the plurality of second splines 78 are substantially identical. The plurality of first splines and second splines 76, 78 may be constructed as detailed in Table 1.

**Table 1: External Spline Dimensions**

| **Data for External Involute Splines** | |
|---|---|
| Type | Fillet Root Side Fit |
| Class | D |
| Pitch Diameter | .7500 in |
| No. of Teeth | 18 |
| Pitch Fraction | 24/48 |
| Base Circle Diameter | .6495in |
| Pressure Angle | 30° |
| Max Form Diameter | .708 in |
| Min Dim. Over Two Wires | .8600 in |
| Wire Size | 0.08 |
| Major Diam | .792 +.000 -.005 in |
| Minor Diam | .667 +.000 -.014 in |
| Additional Reqs when Max effective size is not gaged | |
| Max Profile Variation | .0010 in |
| Max Lead Variation | .0003 in |
| Circular Tooth Thickness Max Actual | .0583in |
| Circular Tooth Thickness Min Actual | .0568 in |
| Max Diam Over Two Wires | .8623in |
| Max Index Variation | .0015in |

As shown, a first end 80 of the plurality of first splines 76 and a first end 82 of the plurality of second splines 78 are spaced from the adjacent first and second ends 64, 66 of the body 62, respectively, by a distance of about .145 ± .005 inches (.368 ± .0013 centimeters). In one embodiment, the distance from the first and second ends 64, 66 to an opposite end 84, 86 of each of the plurality of first and second splines 76, 78 is about .575 ± .010 inches (1.46 ± .0254 centimeters). In addition, a distance from each of the first and second ends 64, 66 to a midpoint M of the adjacent first and second splines 76, 78 may be .360 ± .030 inches (.914 ± .076 centimeters).

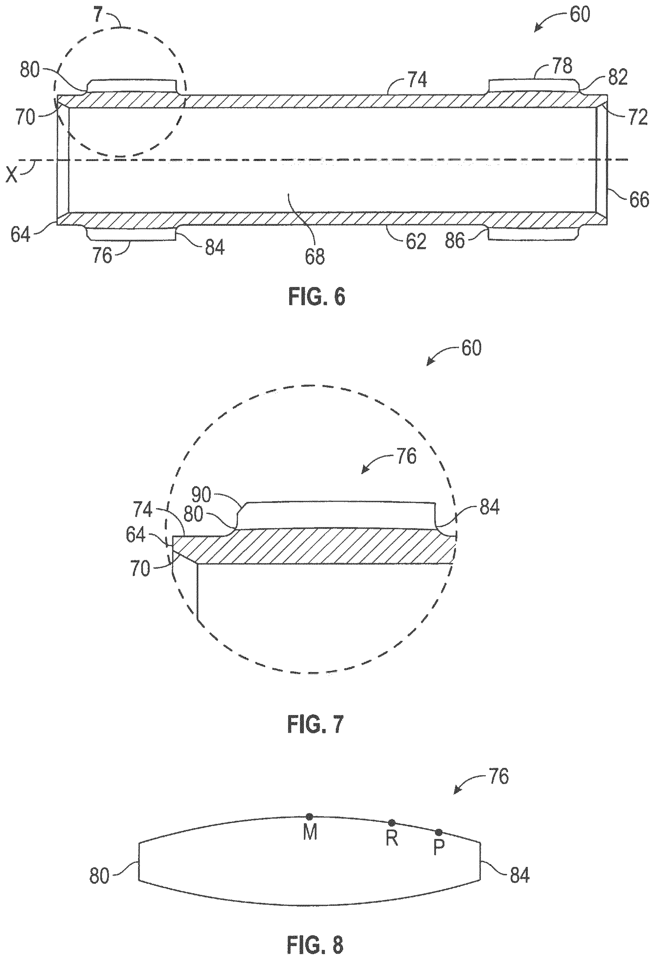

A radius, best illustrated in FIG. 7, may be formed at the interface of the exterior 74 of the body 62 and the ends 80, 84, 82, 86 of the plurality of first and second splines 76, 78. In one embodiment, the radius is about .030 ± .010 inches (.076 ± .0254 centimeters). In addition, a chamfer 90 may be formed at the first ends 80, 82 of the plurality of first and second splines 76, 78. The chamfer 90 may have a width, parallel to a longitudinal axis X of the shaft 60, of about .018 ± .010 inches (.046 ± .0254 centimeters), and may extend at 45° ± 5°.

Referring now to FIG. 8, a cross-section of one of the plurality of first and second splines 76, 78 is illustrated in more detail. In the illustrated, nonlimiting embodiment, the distance between the midpoint M and an end 80, 84, 82, 86 of each of the first and second splines 76, 78 is about .215 inches (.546 centimeters). The periphery of each of the splines 76, 78 extending between the midpoint M and the ends 80, 84, 82, 86 thereof includes a radius of about 10 inches. A first point P on the periphery of the first and second splines 76, 78 is located at a distance parallel to the longitudinal axis X of about .200 inches (.508 centimeters) from the midpoint M and at a vertical distance from the midpoint M of about .0020 ± .0005 inches (.005 ± .001 centimeters). A second point R on the periphery of the first and second splines 76, 78 is located at a distance from the midpoint M, parallel to the longitudinal axis, of about .100 inches (.0254 centimeters) and at a vertical distance of about .0005 ±.0003 inches (.001 ± .00076 centimeters) from the midpoint M.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the scope of the invention. Accordingly, the invention is not to be seen as limited by the foregoing description, but is only limited by the scope of the appended claims.

## Claims

1. A fixed coaxial shaft (60) of a hydraulic unit (32), comprising:
a body (62) having a first end (64) and a second opposite end (66) and a plurality of first splines (76) formed in an exterior surface (74) of the body (62) adjacent the first end (64) and a plurality of second splines (78) formed in the exterior surface (74) of the body adjacent the second end (66), the plurality of first splines (76) and the plurality of second splines (78) being substantially identical, wherein the body (62) has an outer diameter of 1.626 ± .0013 centimeters (.640 ± .0005 inches), and inner diameter of 1.313 ± .0254 centimeters (.517 ± .010 inches), and an overall length between the first end (64) and the second end (66) of 6.802 ± .0127 centimeters (2.678 ± .005 inches),
and wherein a first end (80) of the plurality of first splines (76) and a first end (82) of the plurality of second splines (78) are spaced away from the first end (64) and the second end (66) of the body, respectively, by a distance of .368 ± .0013 centimeters (.145 ± .005 inches).

2. The fixed coaxial shaft according to claim 1, wherein an interface between the plurality of first splines (76) and the exterior surface (74) of the body and an interface between the plurality of second splines (78) and the exterior surface (74) of the body has a radius of .076 ± .0254 centimeters (.030 ± .010 inches).

3. The fixed coaxial shaft according to any preceding claim, wherein a chamfer (90) is formed in the first end (80) of the plurality of first splines (76) and the first end (82) of the plurality of second splines (78), the chamfer (90) having a width parallel to a longitudinal axis of the shaft of .046± .0254 centimeters (.018 ± .010 inches) and extends at an angle of 45° ± 5°.

4. The fixed coaxial shaft according to any preceding claim, wherein a second end (84) of the plurality of first splines (76) and a second end (86) of the plurality of second splines are spaced away from the first end (64) and the second end (66) of the body, respectively, by a distance of 1.46 ± .0254 centimeters (.575 ± .010 inches).

5. The fixed coaxial shaft according to any preceding claim, wherein a midpoint of the plurality of first splines (76) and a midpoint of the plurality of second splines (78) are spaced away from the first end (64) and the second end (66) of the body, respectively, by a distance of .914 ± .076 centimeters (.360 ± .030 inches).

6. The fixed coaxial shaft according to any preceding claim, wherein the plurality of first splines (76) and the plurality of second splines (78) are constructed in accordance with the following Table of External Spline Dimensions:
| **Data for External Involute Splines** | |
|---|---|
| Type | Fillet Root Side Fit |
| Class | D |
| Pitch Diameter | .7500 in |
| No. of Teeth | 18 |
| Pitch Fraction | 24/48 |
| Base Circle Diameter | .6495in |
| Pressure Angle | 30° |
| Max Form Diameter | .708 in |
| Min Dim. OverTwo Wires | .8600 in |
| Wire Size | 0.08 |
| Major Diam | .792 +.000 -.005 in |
| Minor Diam | .667+.000 -.014 in |
| Additional Reqs when Max effective size is not gaged | |
| Max Profile Variation | .0010 in |
| Max Lead Variation | .0003 in |
| Circular Tooth Thickness Max Actual | .0583in |
| CircularTooth Thickness Min Actual | .0568 in |
| Max Diam Over Two Wires | .8623in |
| Max Index Variation | .0015in |

7. The fixed coaxial shaft according to any preceding claim, said shaft having a longitudinal axis X and wherein a periphery of the first splines (76) and the second splines (78) includes a radius, such that a first point P on the periphery of the first and second splines (76, 78) is located at a distance parallel to the longitudinal axis X of .508 centimeters (.200 inches) from a midpoint M and a vertical distance from the midpoint M of .005 ± .001 centimeters (.0020 ± .0005 inches).

8. The fixed coaxial shaft according to claim 7, wherein a second point (R) on the periphery of the first and second splines (76, 78) is located at a distance from the midpoint M, parallel to the longitudinal axis, of .0254 centimeters (.100 inches) and a vertical distance of .001 ± .00076 centimeters (.0005 ±.0003 inches) from the midpoint M.

9. The fixed coaxial shaft according to any preceding claim, wherein a chamfer (70) is formed in the first end (64) of the body, the chamfer extending outwardly at about 60° such that an inner diameter at the first end of the body is .580 ± .010 inches (1.473 ± .0254 centimeters).

10. The fixed coaxial shaft according to claim 9, wherein a substantially identical chamfer (72) is formed at the second end (66) of the body.

## Patentansprüche

1. Feste koaxiale Welle (60) eines Hydraulikaggregats (32), umfassend:
einen Körper (62), aufweisend ein erstes Ende (64) und ein zweites gegenüberliegendes Ende (66) und eine Vielzahl von ersten Keilen (76), die in einer Außenfläche (74) des Körpers (62) benachbart zu dem ersten Ende (64) gebildet ist, und eine Vielzahl von zweiten Keilen (78), die in der Außenfläche (74) des Körpers benachbart zu dem zweiten Ende (66) gebildet ist, wobei die Vielzahl von ersten Keilen (76) und die Vielzahl von zweiten Keilen (78) im Wesentlichen identisch ist, wobei der Körper (62) einen Außendurchmesser von 1,626 ± 0,0013 Zentimetern (0,640 ± 0,0005 Zoll) und einen Innendurchmesser von 1,313 ± 0,0254 Zentimetern (0,517 ± 0,010 Zoll) und eine Gesamtlänge zwischen dem ersten Ende (64) und dem zweiten Ende (66) von 6,802 ± 0,0127 Zentimetern (2,678 ± 0,005 Zoll) aufweist,
und wobei ein erstes Ende (80) aus der Vielzahl von ersten Keilen (76) und ein erstes Ende (82) aus der Vielzahl von zweiten Keilen (78) jeweils in einem Abstand von 0,368 ± 0,0013 Zentimetern (0,145 ± 0,005 Zoll) von dem ersten Ende (64) und dem zweiten Ende (66) des Körpers beabstandet sind.

2. Feste koaxiale Welle nach Anspruch 1, wobei eine Schnittstelle zwischen der Vielzahl von ersten Keilen (76) und der Außenfläche (74) des Körpers und eine Schnittstelle zwischen der Vielzahl von zweiten Keilen (78) und der Außenfläche (74) des Körpers einen Radius von 0,076 ± 0,0254 Zentimetern (0,030 ± 0,010 Zoll) aufweist.

3. Feste koaxiale Welle nach einem vorhergehenden Anspruch, wobei eine Abschrägung (90) in dem ersten Ende (80) aus der Vielzahl von ersten Keilen (76) und dem ersten Ende (82) aus der Vielzahl von zweiten Keilen (78) gebildet ist, wobei die Abschrägung (90) eine Breite parallel zu einer Längsachse der Welle von 0,046 ± 0,0254 Zentimetern (0,018 ± 0,010 Zoll) aufweist und sich in einem Winkel von 45 ° ± 5 ° erstreckt.

4. Feste koaxiale Welle nach einem vorhergehenden Anspruch, wobei ein zweites Ende (84) aus der Vielzahl von ersten Keilen (76) und ein zweites Ende (86) aus der Vielzahl von zweiten Keilen jeweils in einem Abstand von 1,46 ± 0,0254 Zentimetern (0,575 ± 0,010 Zoll) von dem ersten Ende (64) und dem zweiten Ende (66) des Körpers beabstandet sind.

5. Feste koaxiale Welle nach einem vorhergehenden Anspruch, wobei ein Mittelpunkt der Vielzahl von ersten Keilen (76) und ein Mittelpunkt der Vielzahl von zweiten Keilen (78) jeweils in einem Abstand von 0,914 ± 0,076 Zentimetern (0,360 ± 0,030 Zoll) von dem ersten Ende (64) und dem zweiten Ende (66) des Körpers beabstandet sind.

6. Feste koaxiale Welle nach einem vorhergehenden Anspruch, wobei die Vielzahl von ersten Keilen (76) und die Vielzahl von zweiten Keilen (78) gemäß der folgenden Tabelle mit externen Keilabmessungen hergestellt sind:
| **Daten für externe Evolventenkeile** | |
|---|---|
| Art | Rundungswurzelseiteneinpassung |
| Klasse | D |
| Teilkreisdurchmesser | 0,7500 Zoll |
| Anzahl an Zähnen | 18 |
| Teilkreisfraktion | 24/48 |
| Basiskreisdurchmesser | 0,6495 Zoll |
| Druckwinkel | 30 ° |
| Max. Formdurchmesser | 0,708 Zoll |
| Min. Abm. über zwei Drähte | 0,8600 Zoll |
| Drahtgröße | 0, 08 |
| Außendurchmesser | 0,792 + 0,000 - 0,005 Zoll |
| Innendurchmesser | 0,667 + 0,000 - 0,014 Zoll |
| Zusätzliche Anforderungen, wenn max. effektive Größe nicht gemessen ist | |
|---|---|
| Max. Profilvariation | 0,0010 Zoll |
| Max. Leitungsvariation | 0,0003 Zoll |
| Max. tats. Kreiszahndicke | 0,0583 Zoll |
| Min. tats. Kreiszahndicke | 0,0568 Zoll |
| Max. Durchm. über zwei Drähte | 0,8623 Zoll |
| Max. Indexvariation | 0,0015 Zoll |

7. Feste koaxiale Welle nach einem vorhergehenden Anspruch, wobei die Welle eine Längsachse X aufweist und wobei ein Umfang der ersten Keile (76) und der zweiten Keile (78) einen Radius beinhaltet, sodass sich ein erster Punkt P an dem Umfang der ersten und zweiten Keile (76, 78) parallel zu der Längsachse X in einem Abstand von 0,508 Zentimetern (0,200 Zoll) zu einem Mittelpunkt M und in einem vertikalen Abstand von 0,005 ± 0,001 Zentimetern (0,0020 ± 0,0005 Zoll) zu dem Mittelpunkt M befindet.

8. Feste koaxiale Welle nach Anspruch 7, wobei sich ein zweiter Punkt (R) an dem Umfang der ersten und zweiten Keile (76, 78) in einem Abstand von 0,0254 Zentimetern (0,100 Zoll) zu dem Mittelpunkt M parallel zu der Längsachse und einem vertikalen Abstand von 0,001 ± 0,00076 Zentimetern (0,0005 ± 0,0003 Zoll) zu dem Mittelpunkt M befindet.

9. Feste koaxiale Welle nach einem vorhergehenden Anspruch, wobei eine Abschrägung (70) in dem ersten Ende (64) des Körpers gebildet ist, wobei sich die Abschrägung ungefähr 60 ° nach außen erstreckt, sodass ein Innendurchmesser an dem ersten Ende des Körpers 0,580 ± 0,010 Zoll (1,473 ± 0,0254 Zentimeter) beträgt.

10. Feste koaxiale Welle nach Anspruch 9, wobei an dem zweiten Ende (66) des Körpers eine im Wesentlichen identische Abschrägung (72) gebildet ist.

## Revendications

1. Arbre coaxial fixe (60) d'une unité hydraulique (32) ; comprenant :
un corps (62) ayant une première extrémité (64) et une seconde extrémité opposée (66) et une pluralité de premières cannelures (76) formées dans une surface extérieure (74) du corps (62) adjacente à la première extrémité (64) et une pluralité de secondes cannelures (78) formées dans la surface extérieure (74) du corps adjacente à la seconde extrémité (66), la pluralité de premières cannelures (76) et la pluralité de secondes cannelures (78) étant sensiblement identiques, dans lequel le corps (62) a un diamètre externe de 1,626 ± 0,0013 centimètre (0,640 ± 0,0005 pouce), et un diamètre interne de 1,313 ± 0,0254 centimètre (0,517 ± 0,010 pouce), et une longueur totale entre la première extrémité (64) et la seconde extrémité (66) de 6,802 ± 0,0127 centimètre (2,678 ± 0,005 pouce),
et dans lequel une première extrémité (80) de la pluralité de premières cannelures (76) et une première extrémité (82) de la pluralité de secondes cannelures (78) sont espacées de la première extrémité (64) et de la seconde extrémité (66) du corps, respectivement, d'une distance de 0,368 ± 0,0013 centimètre (0,145 ± 0,005 pouce).

2. Arbre coaxial fixe selon la revendication 1, dans lequel une interface entre la pluralité de premières cannelures (76) et la surface extérieure (74) du corps et une interface entre la pluralité de secondes cannelures (78) et la surface extérieure (74) du corps a un rayon de 0,076 ± 0,0254 centimètre (0,030 ± 0,010 pouce).

3. Arbre coaxial fixe selon une quelconque revendication précédente, dans lequel un chanfrein (90) est formé dans la première extrémité (80) de la pluralité de premières cannelures (76) et la première extrémité (82) de la pluralité de secondes cannelures (78), le chanfrein (90) ayant une largeur parallèle à un axe longitudinal de l'arbre de 0,046 ± 0,0254 centimètre (0,018 ± 0,010 pouce) et s'étend à un angle de 45° ± 5°.

4. Arbre coaxial fixe selon une quelconque revendication précédente, dans lequel une seconde extrémité (84) de la pluralité de premières cannelures (76) et une seconde extrémité (86) de la pluralité de secondes cannelures sont espacées de la première extrémité (64) et de la seconde extrémité (66) du corps, respectivement, d'une distance de 1,46 ± 0,0254 centimètre (0,575 ± 0,010 pouce).

5. Arbre coaxial fixe selon une quelconque revendication précédente, dans lequel un point intermédiaire de la pluralité de premières cannelures (76) et un point intermédiaire de la pluralité de secondes cannelures (78) sont espacés de la première extrémité (64) et de la seconde extrémité (66) du corps, respectivement, d'une distance de 0,914 ± 0,076 centimètre (0,360 ± 0,030 pouce).

6. Arbre coaxial fixe selon une quelconque revendication précédente, dans lequel la pluralité de premières cannelures (76) et la pluralité de secondes cannelures (78) sont construites selon le tableau suivant de dimensions de cannelures externes :
| Données pour cannelures à développante externes | |
|---|---|
| Type | Ajustement côté base de filet |
| Classe | D |
| Diamètre de pas | 0,7500 in |
| Nombre de dents | 18 |
| Fraction de pas | 24/48 |
| Diamètre cercle de base | 0,6495 in |
| Angle de pression | 30° |
| Diamètre de forme max | 0,708 in |
| Diamètre min sur deux fils | 0,8600 in |
| Dimension de fil | 0,08 |
| Diamètre majeur | 0,792 + 0,000 - 0,005 in |
| Diamètre mineur | 0,667 + 0,000 - 0,014 in |
| Exigences supplémentaires lorsque la dimension réelle max n'est pas mesurée | |
| Variation de profil max | 0,0010 in |
| Variation d'avance max | 0,0003 in |
| Épaisseur de dent circulaire max réelle | 0,0583 in |
| Épaisseur de dent circulaire min réelle | 0,0568 in |
| Diamètre max sur deux fils | 0,8623 in |
| Variation d'indice max | 0,0015 in |

7. Arbre coaxial fixe selon une quelconque revendication précédente, ledit arbre ayant un axe longitudinal X et dans lequel une périphérie des premières cannelures (76) et des secondes cannelures (78) inclut un rayon, tel qu'un premier point P sur la périphérie des premières et secondes cannelures (76, 78) se trouve à une distance parallèle à l'axe longitudinal X de 0,508 centimètre (0,200 pouce) par rapport à un point intermédiaire M et à une distance verticale par rapport au point intermédiaire M de 0,005 ± 0,001 centimètre (0,0020 ± 0,0005 pouce).

8. Arbre coaxial fixe selon la revendication 7, dans lequel un second point (R) sur la périphérie des premières et secondes cannelures (76, 78) est situé à une distance par rapport au point intermédiaire M, parallèle à l'axe longitudinal, de 0,0254 centimètre (0,100 pouce) et à une distance verticale de 0,001 ± 0,00076 centimètre (0,0005 ± 0,0003 pouce) par rapport au point intermédiaire M.

9. Arbre coaxial fixe selon une quelconque revendication précédente, dans lequel un chanfrein (70) est formé dans la première extrémité (64) du corps, le chanfrein s'étendant vers l'extérieur à environ 60° de telle sorte qu'un diamètre interne à la première extrémité du corps est de 0,580 ± 0,010 pouce (1,473 ± 0,0254 centimètre).

10. Arbre coaxial fixe selon la revendication 9, dans lequel un chanfrein sensiblement identique (72) est formé à la seconde extrémité (66) du corps.
